# EUROPÄISCHE PATENTSCHRIFT

(11) **EP 0 538 233 B1**
(45) Veröffentlichungstag und Bekanntmachung des Hinweises auf die Patenterteilung: **26.11.1997**
(21) Anmeldenummer: 92890191.7
(22) Anmeldetag: 07.09.1992
(51) Int. Cl.: G01N 21/89

(54) **Anordnung zum Prüfen der Versiegelung von Isolierglasscheiben**
Equipment for the inspection of glass panes for isolation
Dispositif pour l'inspection des plaques de verre pour l'isolation

(30) Priorität: 16.09.1991 AT 1858/91
(43) Veröffentlichungstag der Anmeldung: 21.04.1993
(73) Patentinhaber: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(56) Entgegenhaltungen:
- DE-A- 2 648 694
- DE-A- 3 144 379
- DE-A- 3 809 221
- GB-A- 2 144 533

## Beschreibung

Die Erfindung betrifft eine Anordnung mit den Merkmalen des einleitenden Teils des unabhängigen Anspruches 1.

Das Versiegeln von Isolierglasscheiben, d.h. das Füllen der seitlich von den Rändern der beiden Glasscheiben und nach innen vom Abstandhalterrahmen begrenzten Randfuge eines Isolierglasscheibenrohlings mit Versiegelungsmasse (in der Regel eine aushärtende Zwei-Komponenten-Kunststoffmasse auf Polysulfidbasis), wird in modernen Isolierglasherstellungslinien in der Regel von Versiegelungsvorrichtungen, die mit einer oder zwei Versiegelungsdüsen, aus welchen die Versiegelungsmasse in die Randfuge eingebracht wird, ausgestattet sind, durchgeführt.

Bei diesen bekannten Versiegelungsvorrichtungen werden in der Regel im wesentlichen lotrecht stehend ausgerichtete Isolierglasscheibenrohlinge bearbeitet. Daher ist es zur Kontrolle der Qualität der Versiegelung im Eckbereich - dies ist ein Bereich, in dem die Versiegelung mangelhaft sein kann, weil dort die Versiegelungsdüsen um 90° verschwenken bzw. der Versiegelungsvorgang beginnt bzw. endet - notwendig, daß die Isolierglascheiben umgedreht werden, bevor sie nach der Entnahme vom Auslaufförderer der Versiegelungsvorrichtung auf einem Lagerbock abgestellt werden, um die Versiegelung aushärten zu lassen.

Dieses Umdrehen der Isolierglasscheiben zur Kontrolle der Versiegelungsqualität im Eckbereich läßt sich bei größeren Isolierglasscheiben nur von zwei Personen und bei ganz großen Isolierglasscheiben überhaupt nur unter Verwendung geeigneter Hebezeuge durchführen. Es wird daher häufig einfach darauf verzichtet, die Qualität der Versiegelung im Eckbereich, insbesondere im Bereich der unteren auf dem Auslaufförderer der Versiegelungsvorrichtung aufstehenden Ecken, zu überprüfen.

Der Erfindung liegt die Aufgabe zugrunde, eine Anordnung der eingangs genannten Gattung anzugeben, mit der die Kontrolle der Versiegelung von Isolierglasscheiben im Bereich der beim Abtransport durch den Auslaufförderer der Versiegelungsvorrichtung unten liegenden Ecken ohne Herausheben und Umdrehen der Isolierglasscheiben ausgeführt werden kann. Dabei soll die Vorrichtung nicht auf eine bestimmte Ausgestaltung eines Auslaufförderers beschränkt, sondern bei beliebigen Konstruktionen von Fördereinrichtungen verwendet werden können.

Erfindungsgemäß wird dies mit einer Anordnung erreicht, welche die kennzeichnenden Merkmale des unabhängigen Anspruches 1 aufweist.

Aufnahmegeräte, insbesondere Videokameras für die Prüfung von Werkstücken, sind an sich bekannt. So beschreibt die DE 38 09 221 A ein Verfahren zum Feststellen von Fehlstellen von Werkstücken, wobei eine optische Beleuchtungseinrichtung und ein optisches Empfangssystem zur Aufnahme des beleuchteten Oberflächenbereiches vorgesehen sind, die zueinander und zum Oberflächenbereich des Werkstückes derart eingestellt sind, daß unterschiedliche Reflexionseigenschaften von Fehlstellen im Oberflächenbereich gegenüber ihrem Umfeld bei der Erzeugung eines Bildes wirksam werden. Dabei soll im einzelnen so vorgegangen werden, daß ein Bild des Oberflächenbereiches bildpunktweise aufgezeichnet und dann mit einem Referenzbild verglichen wird, Es kann auch ein Speicher vorgesehen sein, in dem das Referenzbild festgehalten wird.

Mit der erfindungsgemäßen Anordnung werden durch die Aufnahmegeräte Bilder aufgenommen, die von wenigstens einem Monitor aufgezeigt werden. Die Bedienungsperson der Versiegelungsvorrichtung kann somit ohne weiteres auch die unten liegenden Ecken von Isolierglasscheiben visuell überprüfen und feststellen, ob die Versiegelung im Eckbereich glatt und ordnungsgemäß (ohne Fehlstellen, wie Hohlräume od.dgl.) ausgeführt ist und nicht etwa Vertiefungen oder sonstige Unregelmäßigkeiten aufweist. Der Monitor ist bei der erfindungsgemäßen Anordnung vorzugsweise im Bereich des Steuerpultes oder, noch bevorzugter, am auslaufseitigen Ende des Auslaufförderers bzw. neben dem dort vorgesehenen, im wesentlichen vertikalen Rand der hinteren Abstützung des Auslaufförderers der Versiegelungsvorrichtung, u.zw. bevorzugt in Augenhöhe angeordnet.

Da bei der erfindungsgemäßen Vorrichtung ein Aufnahmegerät in der Unterbrechung neben dem Anfang der Fördereinrichtung und ein weiteres Aufnahmegerät im Bereich des abgabeseitigen Endes der Fördereinrichtung der Versiegelungsvorrichtung vorgesehen ist, ergibt sich der Vorteil, daß für jede untere Ecke ein gesondertes Aufnahmegerät vorgesehen ist, so daß für die Aufnahmegeräte der jeweils günstigste Blickwinkel ausgewählt werden kann. Dabei kann für jedes Aufnahmegerät ein eigener Monitor vorgesehen sein oder aber es ist das Feld des Monitors entsprechend der Zahl der Aufnahmegeräte - in der Regel zwei - unterteilt.

Ein günstiger Blickwinkel ergibt sich, da die Aufnahmegeräte tiefer als die Fördereinrichtung angeordnet sind. Dabei ist besonders vorteilhaft, wenn die Videokameras der Aufnahmegeräte mit einer Blickrichtung montiert sind, die mit der Ebene der Isolierglasscheibe spitze Winkel einschließen. Es hat sich nämlich gezeigt, daß mit einem solchen Blickwinkel Unebenheiten und Vertiefungen in der Versiegelung besonders "plastisch" abgebildet werden.

Es hat sich als vorteilhaft erwiesen, die Aufnahmegeräte mit je zwei Videokameras auszustatten, da so die Möglichkeit besteht, die Videokameras von einander gegenüberliegenden Seiten der Isolierglasscheibe aus unter spitzem Winkel zur Ebene der Isolierglasscheibe auszurichten, so daß ihre Blickwinkel auf jeweils einen gegenüberliegenden Rand, d.i. der besonders kritische Bereich, der Versiegelung im Eckbereich gerichtet sind.

Die Erfindung erstreckt sich auch darauf, daß eine Steuerung vorgesehen ist, die das Erzeugen eines Bildes durch das im Bereich des Anfanges der Fördereinrichtung angeordnete Aufnahmegerät auslöst, wenn die Isolierglasscheibe nach Beendigung des Versiegelungsvorganges und vor Beginn des Abtransportes durch die Fördereinrichtung stillsteht.

Sinngemäß kann im Rahmen der Erfindung vorgesehen sein, daß eine Steuerung vorgesehen ist, die das Erzeugen eines Bildes durch das am Ende der Fördereinrichtung vorgesehene Aufnahmegerät auslöst, wenn die Isolierglasscheibe am Ende der Fördereinrichtung in Entnahmeposition steht. Auf diese Weise werden die Bilder durch die Aufnahmegeräte im jeweils richtigen Zeitpunkt, nämlich dann, wenn die gerade aufzunehmende und abzubildende Ecke der Isolierglasscheibe über das eine bzw. andere Ende des Auslaufförderers vorsteht, aufgenommen.

Um das Überprüfen der am Monitor erzeugten Bilder in Ruhe ausführen zu können, ist im Rahmen der Erfindung bevorzugt, daß die erzeugten Bilder Stehbilder sind, die auf dem Monitor bzw. den Monitoren solange aufgezeigt werden, bis die nächste Isolierglasscheibe zur Versiegelung herantransportiert wird.

In einer praktischen Ausführungsform der Erfindung kann vorgesehen sein, daß die Steuerung eine Einrichtung zum Erfassen der Isolierglasscheibe aufweist, die das am Anfang der Fördereinrichtung angeordnete Aufnahmegerät steuert, wenn die von ihm abzubildende, bezogen auf die Förderrichtung, hintere Ecke der Isolierglasscheibe im Bereich des Anfanges der Fördereinrichtung angeordnet ist. Sinngemäß kann im Rahmen der Erfindung weiters vorgesehen sein, daß die Steuerung eine Einrichtung zum Erfassen der Isolierglasscheibe aufweist, die das Aufnahmegerät steuert, wenn die von ihm abzubildende, bezogen auf die Förderrichtung vordere Ecke der Isolierglasscheibe im Bereich des Endes der Fördereinrichtung angeordnet ist.

Die am Monitor erzeugten Bilder können ohne Nachteil solange "stehen" bleiben, bis die nächsten Ecken der Isolierglasscheibe abzubilden sind. Es empfiehlt sich daher im Rahmen der Erfindung eine Ausführungsform, bei der vorgesehen ist, daß eine Einrichtung zum Erfassen des Herantransportes der nächsten zu versiegelnden Isolierglasscheibe vorgesehen ist, die das Löschen der an dem wenigstens einem Monitor aufgezeigten Abbildung bzw. Abbildungen von Ecken der zuvor versiegelten Isolierglasscheibe auslöst.

In einer praktischen Ausführungsform der Erfindung ist vorgesehen, daß insbesondere den im Bereich der Versiegelungsdüse vorgesehenen Videokameras das Aufnahmegerät, dessen Optik schützende Deckel zugeordnet sind, die ausschließlich beim Erzeugen einer Aufnahme geöffnet sind. Diese Ausführungsform bewährt sich insoferne, als es bei Versiegelungsvorrichtungen, auch wenn diese sehr genau gesteuert werden, nie ganz ausgeschlossen werden kann, daß Versiegelungsmasse aus der Versiegelungsdüse oder den Versiegelungsdüsen nachtropft und auf die Videokameras des Aufnahmegeräts gelangt.

Insbesondere, wenn in der Halle, in der die Versiegelungsstation aufgestellt ist, ungünstige Lichtverhältnisse herrschen, bewährt sich eine Ausführungsform der Erfindung, bei der vorgesehen ist, daß den Aufnahmegeräten je eine Beleuchtungseinrichtung zugeordnet ist, welche die abzubildende Ecke unter einem Winkel beleuchtet, der vom Winkel, den die Blickrichtung des Aufnahmegerätes mit der Ebene der Isolierglasscheibe einschließt, verschieden ist.

Die Anordnung einer gesonderten Beleuchtungseinrichtung erlaubt es, die für die Abbildung der Ecken jeweils günstigsten Beleuchtungsverhältnisse einzustellen und dies unabhängig von den sonst in der Halle herrschenden Lichtverhältnissen.

Da es bei der Erfindung nicht erforderlich ist, daß die den Aufnahmegeräten oder dem Aufnahmegerät zugeordnete Beleuchtungseinrichtung ständig in Betrieb ist, kann vorgesehen sein, daß die Beleuchtungseinrichtung mit der Steuerung der Aufnahmegeräte unter Einbeziehung der Einrichtung zum Erfassen der Anwesenheit einer Isolierglasscheibe gekuppelt ist, wobei die Beleuchtungseinrichtung nur eingeschaltet ist, während eine Aufnahme gemacht wird. Insbesondere bei dieser Ausführungsform kann vorgesehen sein, daß die Beleuchtungseinrichtung als Lichtquelle ein Blitzlicht aufweist.

Wie oben erwähnt, sind bei der erfindungsgemäßen Anordnung zwei Aufnahmegeräte vorgesehen. Gewöhnlich reicht dies hin, da die bei in Entnahmeposition stehenden Isolierglasscheiben oberen Ecken auch visuell ohne besondere Hilfsmittel geprüft werden können.

Wenn aber zum Entladen der Versiegelungsvorrichtung automatisch arbeitende Vorrichtungen (Entladeroboter oder Entladeautomaten) vorgesehen sind, dürfen sich Bedienungspersonen nicht im Bereich des Entladeroboters befinden. Daher ist gemäß einem Vorschlag der Erfindung vorgesehen, daß insbesondere bei einer mit einem Entladeautomaten oder -roboter ausgestatteten Versiegelungsvorrichtung wenigstens ein weiteres Aufnahmegerät zum Betrachten der oberen Ecken der versiegelten Isolierglasscheiben vorgesehen ist.

Bewährt hat es sich dabei, wenn vorgesehen ist, daß das Aufnahmegerät und die ihnen ggf. zugeordneten Beleuchtungseinrichtungen an einem auf und ab verstellbaren Balken montiert sind, der frei drehbare Rollen trägt, an welchen der obere Rand der abzutransportierenden, versiegelten Isolierglasscheibe abgestützt ist. In ähnlicher Weise kann vorgesehen sein, daß, das Aufnahmegerät und die diesem gegebenenfalls zugeordneten Beleuchtungseinrichtungen an einem auf und ab verstellbaren Balken montiert sind, der frei drehbare Rollen trägt, an welchen der obere Rand der abzutransportierenden, versiegelten Isolierglasscheibe abgestützt ist. Ein solcher Balken ist beispielsweise aus der DE 30 38 425 A, der AT 370 201 B oder der AT 370 706 B im Zusammenhang mit Zusammenbaustationen für Isolierglasscheiben bekannt.

Weitere Einzelheiten und Merkmale der Erfindung ergeben sich aus der nachstehenden Beschreibung, in welcher auf die Zeichnungen Bezug genommen wird, in der Ausführungsformen der Erfindung teilweise schematisch dargestellt sind. Es zeigt:
Fig. 1 einen Auslaufförderer für versiegelte Isolierglasscheiben der aus der DE 30 38 425 A bekannten Bauart, bei dem die erfindungsgemäße Anordnung vorgesehen ist,
Fig. 2 den Auslaufförderer aus Fig. 1 in Draufsicht,
Fig. 3 einen Auslaufförderer der aus der EP 0 123 009 A bekannten Bauart, bei dem die erfindungsgemäße Anordnung vorgesehen ist,
Fig. 4 schematisch eine erfindungsgemäße Anordnung im Bereich eines Auslaufförderers einschließlich der Steuerung der erfindungsgemäßen Anordnung,
Fig. 5 eine Ausführungsform mit zwei Videokameras je Aufnahmegerät und
Fig. 6 eine Draufsicht hiezu.

Die erfindungsgemäße Anordnung ist für gewöhnlich Auslaufförderern für Versiegelungsautomaten von Isolierglasscheiben zugeordnet. Diese Versiegelungsautomaten können eine aus dem o.g. Schriften genannte Konstruktion oder auch die Konstruktion gemäß der EP 391 884 A1 besitzen.

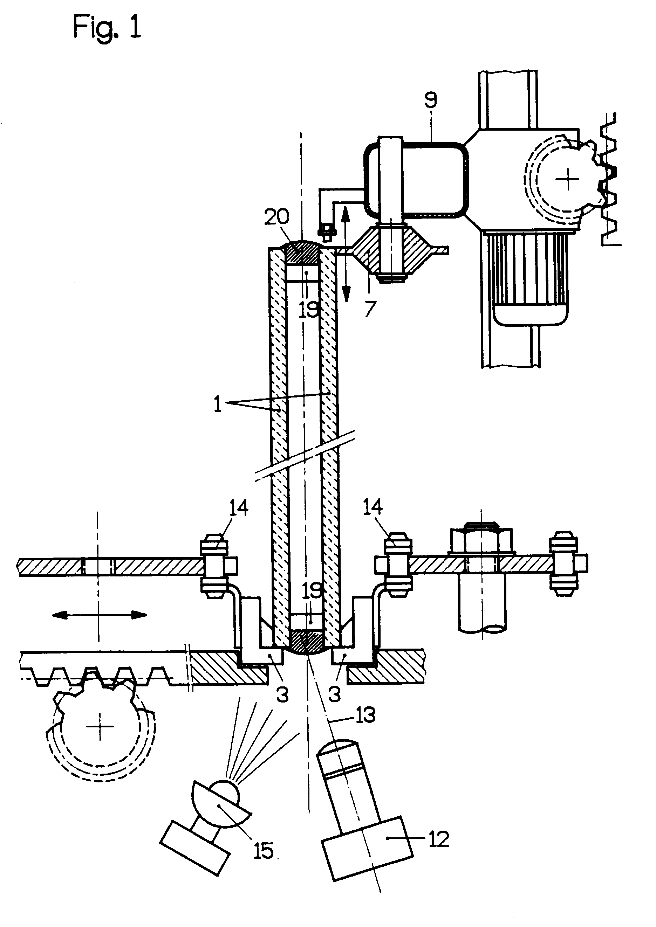

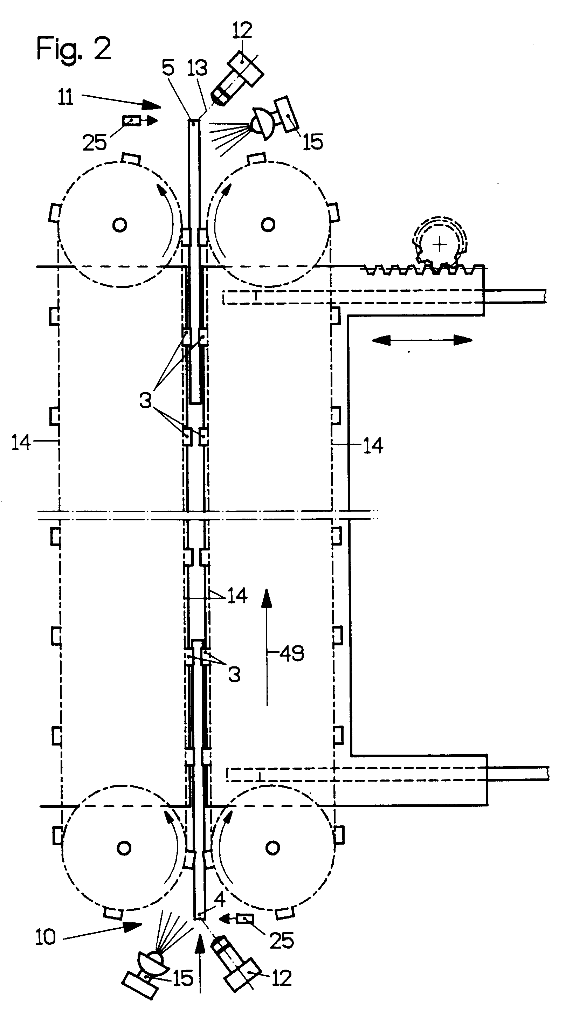

Wie in Fig. 1 und 2 gezeigt, besitzt der Auslaufförderer beispielsweise die aus der DE 30 38 425 A bekannte Konstruktion. Bei dieser wird eine Isolierglasscheibe 1, deren von den Rändern der Glasscheiben zur Seite hin und nach innen vom Abstandhalterrahmen 19 begrenzte Randfuge mit Versiegelungsmasse 20 gefüllt ist, unten von hakenförmigen Auflagern 3, die an Endlosketten 14 befestigt sind, abgestützt und bewegt. Im Bereich des oberen Randes der Isolierglasscheibe 1 sind an einem Balken 9, der mit Hilfe eines Antriebes auf- und abverschiebbar ist, angreifende frei drehbare Stützrollen 7 vorgesehen. An Stelle des Balkens 9 mit den Stützrollen 7 kann auch eine andere seitliche Abstützung, z.B. ein Rollenfeld oder eine Luftkissenwand vorgesehen sein.

Wie in den Fig. 1 und 2 schematisch angedeutet, ist den Enden des in den Fig. 1 und 2 gezeigten Auslaufförderers, d.h. dem einlaufseitigen Ende 10 und dem auslaufseitigen Ende 11, jeweils ein mit zwei Videokameras 51 ausgeführtes Aufnahmegerät 12 zugeordnet.

Das Aufnahmegerät 12 ist so angeordnet, daß seine Blickrichtung 13 (in Fig. 1 und 2 durch eine strichlierte Linie angedeutet) schräg von unten, d.h. unter einem zur Ebene der Isolierglasscheibe 1 spitzen Winkel, auf die jeweils in der Nähe des Aufnahmegerätes 12 befindliche Ecke 4 bzw. 5 der Isolierglasscheibe 1 gerichtet ist.

Um die Ecken 4 bzw. 5, d.h. die, bezogen auf die Förderrichtung (Pfeil 49) vordere Ecke 5 und die hintere Ecke 4, für die Aufnahme durch die Aufnahmegeräte 12 entsprechend auszuleuchten, sind den Enden 10 bzw. 11 des Auslaufförderers zusätzlich Beleuchtungseinrichtungen 15 zugeordnet. Diese Beleuchtungseinrichtungen 15 schließen mit der Ebene der Isolierglasscheibe 1 vorzugsweise einen anderen Winkel ein als die Aufnahmegeräte 12. Die Beleuchtungseinrichtungen 15 können als Lichtquellen normale Glühbirnen, Niedervolt- oder Halogenbirnen besitzen, oder aber Blitzlichtgeräte sein, die nur im Moment der Aufnahme, d.h. wenn die Ecke 4 am Einlauf 10 des Auslaufförderers oder die Ecke 5 am Ende 11 des Auslaufförderers angeordnet ist, Licht abgeben.

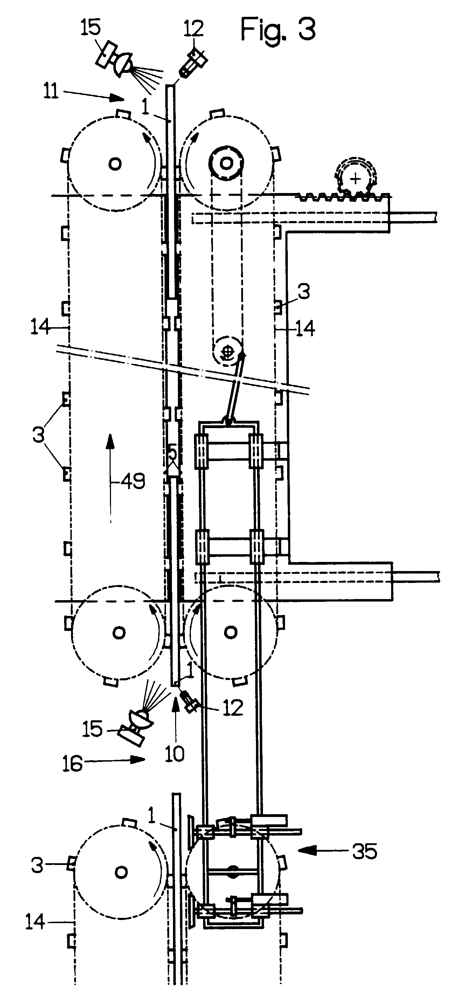

Die im Zusammenhang mit den Fig. 1 und 2 beschriebene Konstruktion gilt auch für die mit einem Hilfsförderer 35 ausgestattete Fördervorrichtung, die aus der EP-A-0 123 009 bekannt ist. In Fig. 3 ist zusätzlich die Unterbrechung zwischen den beiden Förderbahnabschnitten, nämlich die Lücke 16, gezeigt, in der eine Versiegelungsdüse (nicht gezeigt) senkrecht zur Bildebene der Fig. 3 auf und ab bzw. in Stellung fährt, um die vertikal ausgerichteten Randfugen und die untere horizontale Randfuge von Isolierglasscheiben 1 mit Versiegelungsmasse 20 zu füllen.

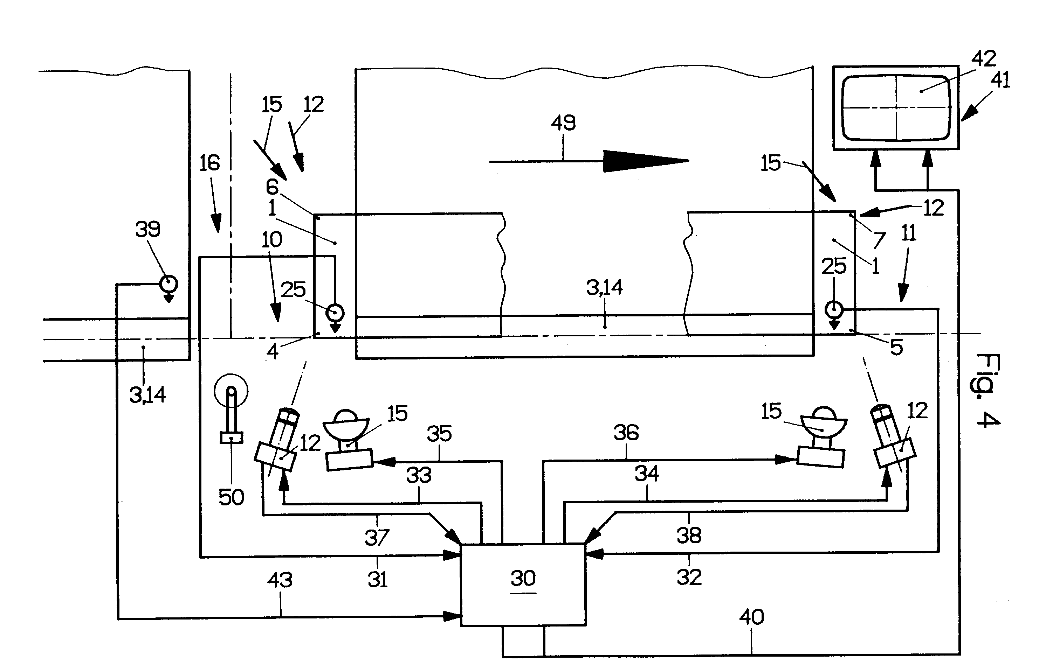

Wie bisher beschrieben, sind Aufnahmegeräte 12 und diesen zugeordnete Beleuchtungseinrichtungen 15 an wenigstens einem Ende des Auslaufförderers, vorzugsweise aber wie gezeigt an beiden Enden 10 und 11 des Auslaufförderers vorgesehen. Um die Aufnahmegeräte 12 und ggf. die Beleuchtungseinrichtungen 15 entsprechend zu steuern, d.h. immer dann auszulösen bzw. in Betrieb zu setzen, wenn eine Ecke 4 bzw. 5 am Anfang 10 bzw. am Ende 11 des Auslaufförderers ist, können so wie in den Fig. 2 und 4 gezeigt, Sensoren 25 vorgesehen sein (die Sensoren sind beispielsweise Annäherungsschalter, Lichtschranken oder ähnlich berührungslos ansprechende Sensoren oder aber auch einfache, mechanische Schalter), welche die Anwesenheit der Ecken 4 bzw. 5 erfassen.

Wie in Fig. 4 gezeigt, besitzt die erfindungsgemäße Anordnung eine zentrale Steuereinheit 30. Dieser Steuereinheit 30 werden Signale zugeführt, wenn einer der Sensoren 25 eine Ecke 4 bzw. 5 einer Isolierglasscheibe 1 erfaßt, die sich am Anfang 10 bzw. am Ende 11 des Auslaufförderers befindet. Hiezu sind die Sensoren 25 über Steuerleitungen 31, 32 mit der Zentraleinheit 30 verbunden. Die Zentraleinheit 30 gibt über Steuerleitungen 33, 35 einen Befehl an das Aufnahmegerät 12 und die Beleuchtungseinrichtung 15, die dem Ende 10 des Auslaufförderers zugeordnet sind, ab, um die Ecke 4 der Isolierglasscheibe 1, die sich im Bereich des Endes 10 befindet, abzubilden. Sinngemäß werden die Beleuchtungseinrichtung 15 und das Aufnahmegerät 12 im Bereich des Endes 11 des Auslaufförderers über Steuerleitungen 34, 36 angesteuert, wenn der im Bereich des Endes 11 vorgesehene Sensor 25 die Anwesenheit der Ecke 5 der Isolierglasscheibe 1 an dem auslaufseitigen Ende 11 feststellt.

Die von den Aufnahmegeräten erzeugten Bildsignale werden über Leitungen 37 bzw. 38 zur Zentraleinheit 30 geleitet. Die Zentraleinheit 30 qibt dann über eine Signalleitung 40 die Bildsignale an einen Monitor 41 ab, der im gezeigten Ausführungsbeispiel einen in vier Felder unterteilten Bildschirm 42 aufweist. Am Monitor 41 sind vier Felder vorgesehen, weil bei der Ausführungsform von Fig. 4 auch den oberen Ecken 6 und 7 der Isolierglasscheibe 1 Aufnahmegeräte 12 und Beleuchtungseinrichtungen 15 zugeordnet sind. Diese Aufnahmegeräte 12 und die Beleuchtungseinrichtungen 15, welche die Ecken 6 und 7 beleuchten bzw. abbilden, sind mit Vorteil an dem in Fig. 1 gezeigten Balken 9, der die frei drehbaren Stützrollen 7 trägt, befestigt, so daß sie jeweils in der richtigen Höhe gegenüber den Ecken 6 und 7 der Isolierglasscheibe 1 ausgerichtet sind.

Wenn die in Fig. 4 lediglich durch Pfeile symbolisierten Aufnahmegeräte 12 und die Beleuchtungseinrichtungen 15 im Bereich der oberen Ecke 6 und 7 der Isolierglasscheibe 1 nicht vorgesehen sind, genügt es, den Bildschirm 42 des Monitors 41 lediglich in zwei Hälften, vorzugsweise in zwei nebeneinanderliegende Hälften zu unterteilen und in der einen Hälfte, vorzugweise in der in Fig. 4 linken Hälfte, das Abbild der Ecke 4 und in der rechten Hälfte des Bildschirmes 42 das Abbild der Ecke 5 der Isolierglasscheibe 1 stillstehend darzustellen.

Weiters ist in Fig. 4 ein Sensor 39 vorgesehen, der über eine Steuerleitung 43 mit der Zentraleinheit 30 verbunden ist. Der Sensor 39 erfaßt das Heranfördern der nächsten Isolierglasscheibe 1 in den Bereich der Unterbrechung 16 der Fördevorrrichtungen 3, 14, in welcher Unterbrechung 16 die Versiegelungsdüse 50 in ihrer Wartestellung (Bereitschaftsstellung) ist, so daß die Zentraleinheit 30 aufgrund des über die Leitung 43 erhaltenen Signals die Aufnahmegeräte 12 und die Beleuchtungseinrichtungen 15 für das Abbilden der nächsten Ecken 4, 5 (und gegebenenfalls der Ecke 6 und 7) der nachfolgenden Isolierglasscheibe 1 bereit macht und die bis dahin am Monitor 41 dargestellten Bilder der Ecken 4, 5 (und ggf. der Ecken 6 und 7) der vorhergehenden Isolierglasscheibe 1 sowie den Speicher für diese Bilder in der Zentraleinheit 30 löscht.

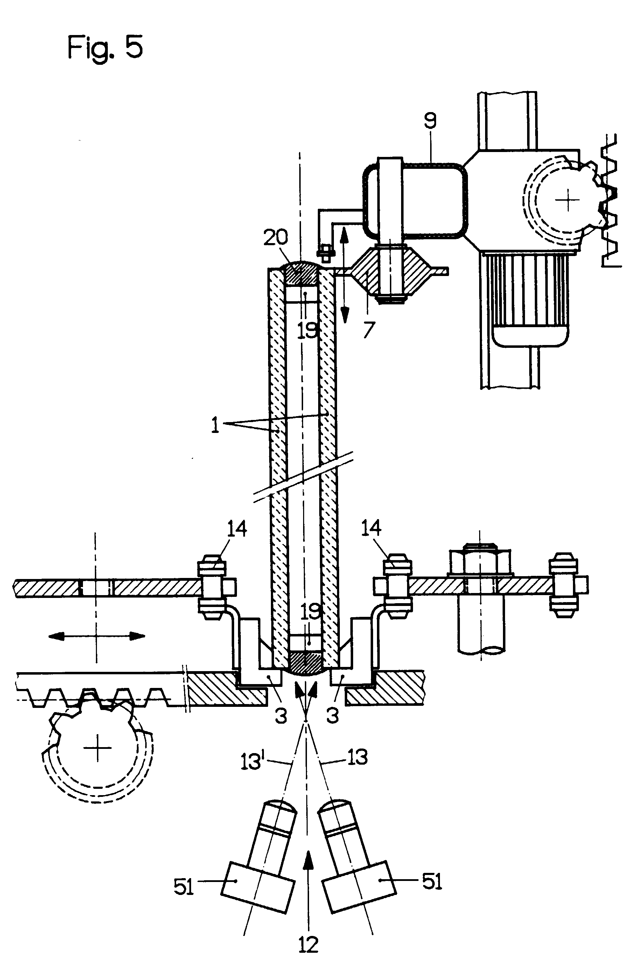

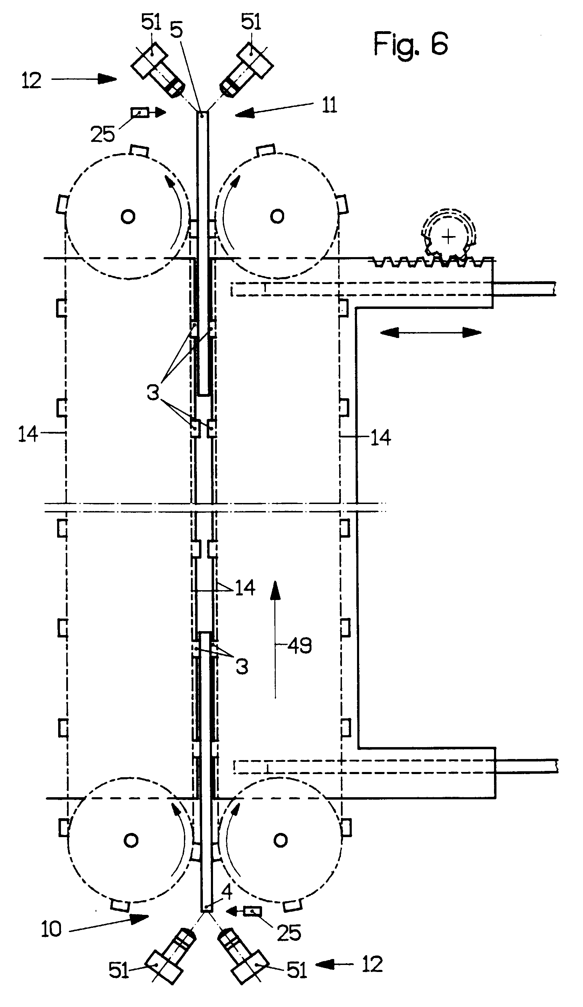

In den Fig. 5 und 6 ist gezeigt, daß die zwei Videokameras 51 des Aufnahmegeräts 12 mit unterschiedlichen Blickrichtungen 13, 13' auf die zu überwachende Versiegelung 20 in der Randfuge der Isolierglasscheibe 1 gerichtet sind. Wie die Fig. 6 zeigt, können solche Aufnahmegeräte 12 mit zwei Videokameras 51 sowohl am einlaufseitigen Ende 10 als auch am auslaufseitigen Ende 11 der Fördervorrichtung vorgesehen sein. Es versteht sich, daß Aufnahmegeräte 12 mit zwei Videokameras 51 auch so angeordnet sein können, daß sie, wie in Fig. 4 angedeutet, an einem Balken so montiert sind, daß sie die oberen Ecken 6 und/oder 7 einer Isolierglasscheibe 1 abbilden können.

Die Anordnung der Videokameras 51 ist so getroffen, daß die Blickrichtungen 13, 13' jeweils auf den gegenüberliegenden Rand der Randfuge, also den von der Videokamera 51 weiter entfernt liegenden Rand der Versiegelungsmasse gerichtet ist (die Blickrichtungen 13, 13' kreuzen einander also). Von den zwei Videokameras werden somit zwei, einander ergänzende Aufnahmen erzeugt, die nebeneinander, gegebenenfalls auch als ein einziges Bild auf einem Monitor, wie dem Monitor 41, aufgezeigt werden können.

## Patentansprüche

1. Anordnung zum Überprüfen der Versiegelung im Bereich der Ecken (4, 5, 6, 7) einer Isolierglasscheibe (1), die sich in einer Versiegelungsanlage mit wenigstens einer Versiegelungsdüse (50) und mit einer Fördereinrichtung (3, 14) befindet, wobei in der Fördereinrichtung (3, 14) eine Unterbrechung (16) vorgesehen ist, durch die sich die Versiegelungsdüse (50) aus einer Bereitschaftsstellung in ihre Wirkstellung bewegt, dadurch gekennzeichnet, daß ein bildgebendes Aufnahmegerät (12) in der Unterbrechung (16) der Fördereinrichtung (3, 14) und tiefer als die Fördereinrichtung (3, 14) vorgesehen ist, daß ein weiteres bildgebendes Aufnahmegerät (12) im Bereich des Endes (11) der Fördereinrichtung (3, 14) und tiefer als die Fördereinrichtung (3, 14) vorgesehen ist, daß jedes Aufnahmegerät (12) aus zwei Videokameras (51) besteht, die mit Blickrichtungen (13, 13') montiert sind, die mit der Ebene der Isolierglasscheibe (1) spitze Winkel einschließen, daß die Blickrichtungen (13, 13') der Videokameras (51) auf den jeweils gegenüberliegenden Rand der Versiegelung der Isolierglasscheibe (1) gerichtet sind, und daß die Aufnahmegeräte (12) mit wenigstens einem Monitor (41) zur Wiedergabe von Bildern der von den Aufnahmegeräten (12) erfaßten Ecken (4, 5, 6, 7) der Isolierglasscheibe (1) verbunden sind.

2. Anordnung nach Anspruch 1, dadurch gekennzeichnet, daß den Videokameras (51) des im Bereich der Versiegelungsdüse (50) vorgesehenen Aufnahmegeräts (12), dessen Optik schützende Deckel zugeordnet sind, die ausschließlich beim Erzeugen einer Aufnahme geöffnet sind.

3. Anordnung nach Anspruch 1 oder 2, dadurch gekennzeichnet, daß den Aufnahmegeräten (12) je eine Beleuchtungseinrichtung (15) zugeordnet ist, welche die abzubildende Ecke (4, 5, 6, 7) unter einem Winkel beleuchtet, der vom Winkel, den die Blickrichtung (13) der Videokameras (51) des Aufnahmegerätes (12) mit der Ebene der Isolierglasscheibe (1) einschließt, verschieden ist.

4. Anordnung nach Anspruch 3, dadurch gekennzeichnet, daß die Beleuchtungseinrichtung (15) als Lichtquelle ein Blitzlicht aufweist.

5. Anordnung nach einem der Ansprüche 1 bis 4, dadurch gekennzeichnet, daß wenigstens ein weiteres Aufnahmegerät (12) zum Erfassen von Bildern der oberen Ecken (6, 7) der versiegelten Isolierglasscheibe (1) vorgesehen ist.

6. Anordnung nach Anspruch 5, dadurch gekennzeichnet, daß das Aufnahmegerät (12) an einem auf und ab verstellbaren Balken (9) montiert ist, der frei drehbare Rollen (7) trägt, an welchen der obere Rand der abzutransportierenden, versiegelten Isolierglasscheibe (1) abgestützt ist.

7. Anordnung nach Anspruch 6, dadurch gekennzeichnet, daß die dem Aufnahmegerät (12) zugeordnete Beleuchtungseinrichtung (15) an dem auf und ab verstellbaren Balken (9) montiert ist.

8. Anordnung nach einem der Ansprüche 1 bis 7, dadurch gekennzeichnet, daß die Videokameras (51) mit zur Ebene der Isolierglasscheibe (1) im wesentlichen symmetrisch ausgerichteten Blickrichtungen montiert sind.

9. Anordnung nach einem der Ansprüche 1 bis 8, dadurch gekennzeichnet, daß eine Steuerung (25, 30) vorgesehen ist, die das Erzeugen eines Bildes durch das im Bereich des Anfanges (10) der Fördereinrichtung (3, 14) angeordnete Aufnahmegerät (12) auslöst, wenn die Isolierglasscheibe (1) nach Beendigung des Versiegelungsvorganges und vor Beginn des Abtransportes durch die Fördereinrichtung (3, 14) stillsteht.

10. Anordnung nach einem der Ansprüche 1 bis 9, dadurch gekennzeichnet, daß eine Steuerung (25, 30) vorgesehen ist, die das Erzeugen eines Bildes durch das am Ende (11) der Fördereinrichtung (3, 14) vorgesehene Aufnahmegerät (12) auslöst, wenn die Isolierglasscheibe (1) am Ende (11) der Fördereinrichtung (3, 14) in Entnahmeposition steht.

11. Anordnung nach einem der Ansprüche 1 bis 10, dadurch gekennzeichnet, daß die erzeugten Bilder Stehbilder sind, die auf dem Monitor (41) bzw. den Monitoren (41) solange aufgezeigt werden, bis die nächste Isolierglasscheibe (1) zur Versiegelung herantransportiert wird.

12. Anordnung nach Anspruch 11, dadurch gekennzeichnet, daß die Steuerung (30) eine Einrichtung (25) zum Erfassen der Isolierglasscheibe (1) aufweist, die das am Anfang (10) der Fördereinrichtung (3, 14) angeordnete Aufnahmegerät (12) steuert, wenn die von ihm abzubildende, bezogen auf die Förderrichtung (49), hintere Ecke (4) der Isolierglasscheibe (1) im Bereich des Anfanges (10) der Fördereinrichtung (3, 14) angeordnet ist.

13. Anordnung nach Anspruch 12, dadurch gekennzeichnet, daß die Steuerung eine Einrichtung (25) zum Erfassen der Isolierglasscheibe (1) aufweist, die das Aufnahmegerät (12) steuert, wenn die von ihm abzubildende, bezogen auf die Förderrichtung (49) vordere Ecke (5) der Isolierglasscheibe (1) im Bereich des Endes (11) der Fördereinrichtung (3, 14) angeordnet ist.

14. Anordnung nach einem der Ansprüche 1 bis 13, dadurch gekennzeichnet, daß eine Einrichtung (39) zum Erfassen des Herantransportes der nächsten zu versiegelnden Isolierglasscheibe (1) vorgesehen ist, die das Löschen der an dem wenigstens einem Monitor (41) aufgezeigten Abbildungen von Ecken (4, 5, 6, 7) der zuvor versiegelten Isolierglasscheibe (1) auslöst.

15. Anordnung nach einem der Ansprüche 1 bis 14, dadurch gekennzeichnet, daß die Beleuchtungseinrichtung (15) mit der Steuerung (30) der Aufnahmegeräte (12) unter Einbeziehung der Einrichtung (25) zum Erfassen der Anwesenheit einer Isolierglasscheibe (1) gekuppelt ist, wobei die Beleuchtungseinrichtung (15) nur eingeschaltet ist, während eine Aufnahme gemacht wird.

16. Anordnung nach einem der Ansprüche 12 bis 15, dadurch gekennzeichnet, daß die Einrichtung zum Erfassen der Isolierglasscheibe (1) eine Lichtschranke oder ein Annäherungsschalter ist.

## Claims

1. An arrangement for testing the sealing in the region of the comers (4,5, 6,7) of an insulating glass pane (1) which is disposed in a sealing apparatus with at least one sealing nozzle (50) and with a conveyor device (3, 14), wherein the conveyor device (3, 14) is provided with an interruption (16), through which the sealing nozzle (50) moves from a stand-by position into its operative position, characterized in that receiving apparatus (12) providing an image is provided in the interruption (16) of the conveyor device (3, 14), deeper than the conveyor device (3, 14), in that a further receiving apparatus (12) providing a picture is provided in the region of the end (11) of the conveyor device (3, 14), deeper than the conveyor device (3, 14), in that each receiving apparatus (12) consists of two video cameras (51) which are mounted with look directions (13, 13') which include acute angles with the plane of the insulating glass pane (1), in that the look directions (13, 13') of the video cameras (51) are directed on to the respective opposite edges of the sealing of the insulating glass pane (1), and in that the receiving apparatuses (12) are coupled to at least one monitor (41) for reproducing images of the comers (4, 5, 6, 7) of the insulating glass pane (1) detected by the receiving apparatuses (12).

2. An arrangement according to claim 1, characterized in that protective covers are associated with the optics of the video cameras (51) of the receiving apparatus (12) provided in the region of the sealing nozzle (50) and are opened solely when making an exposure.

3. An arrangement according to claim 1 or 2, characterized in that an illuminating device (15) is associated with each of the receiving apparatuses (12) and illuminates the comer (4, 5, 6, 7) to be imaged at an angle which is different from the angle which the look direction (13) of the video cameras (51) of the receiving apparatus (12) makes with the plane of the insulating glass pane (1).

4. An arrangement according to claim 3, characterized in that the illuminating device (15) comprises a flash lamp as light source.

5. An arrangement according to any of claims 1 to 4, characterized in that at least one further receiving apparatus (12) is provided for detecting images of the upper comers (6, 7) of the sealed insulating glass pane (1).

6. An arrangement according to claim 5, characterized in that the receiving apparatus (12) is mounted on a beam (9) which can be moved up and down and which carries freely rotatable rollers (7) on which the upper edge of the sealed insulating glass pane (1) to be discharged is supported.

7. An arrangement according to claim 6, characterized in that the illuminating device (15) associated with the receiving apparatus (12) is mounted on the beam (9) which can be moved up and down.

8. An arrangement according to any of claims 1 to 7, characterized in that the video cameras (51) are mounted with substantially symmetrically aligned look directions relative to the plane of the insulating glass pane (1).

9. An arrangement according to any of claims 1 to 8, characterized in that a controller (25, 30) is provided and triggers the generation of an image by the receiving apparatus (12) arranged in the region of the start (10) of the conveyor device (3, 14) when the insulating glass pane (1) is stationary after completion of the sealing operation and before beginning the discharge by the conveyor device (3, 14).

10. An arrangement according to any of claims 1 to 9, characterized in that a controller (25, 30) is provided which triggers the generation of an image by the receiving apparatus (12) provided at the end (11) of the conveyor device (3, 14) when the insulating glass pane (1) stands in the position for removal at the end (11) of the conveyor device (3, 14).

11. An arrangement according to any of claims 1 to 10, characterized in that the images generated are still pictures which are displayed on the monitor (41) or monitors (41) until the next insulating glass pane (1) is transported in for sealing.

12. An arrangement according to claim 11, characterized in that the controller (30) comprises a device (25) for detecting the insulating glass pane (1), which controls the receiving apparatus (12) arranged at the start (10) of the conveyor device (3, 14) when the comer (4) of the insulating glass pane (1) to be imaged thereby at the rear relative to the conveying direction (49) is located in the region of the start (10) of the conveyor device (3, 14).

13. An arrangement according to claim 12, charactenzed in that the controller comprises a device (25) for detecting the insulating glass pane (1), which controls the receiving apparatus (12) when the comer (5) of the insulating glass pane (1) to be imaged thereby at the front relative to the conveying direction (49) is located in the region of the end (11) of the conveyor device (3, 14).

14. An arrangement according to any of claims 1 to 13, characterized in that a device (39) is provided for detecting the transporting in of the next insulating glass pane (1) to be sealed, which triggers the clearing of the images of corners (4, 5, 6, 7) of the previously sealed insulating glass pane (1) displayed on the at least one monitor (41).

15. An arrangement according to any of claims 1 to 14, characterized in that the illuminating device (15) is coupled to the controller (30) of the receiving apparatus (12) with involvement of the device (25) for detecting the presence of an insulating glass pane (1), wherby the illuminating device (15) is only tumed on while an exposure is made.

16. An arrangement according to any of claims 12 to 15, characterized in that the device for detecting the insulating glass pane (1) is a light barrier or a proximity switch.

## Revendications

1. Agencement pour contrôler le scellement dans la zone des angles (4, 5, 6, 7) d'un vitrage isolant (1) qui se trouve dans une installation de scellement comprenant au moins une buse de scellement (50) et un dispositif transporteur (3, 14), une interruption (16) étant prévue dans le dispositif transporteur (3, 14), à travers laquelle la buse de scellement (50) se déplace d'une position d'attente inactive à sa position active, caractérisé par le fait que des appareils de prise de vues (12) sont prévus dans l'interruption (16) du dispositif transporteur (3, 14), dans une position plus basse que le dispositif transporteur (3, 14), qu'un autre appareil de prise de vues (12) est prévu dans la zone de la fin (11) du dispositif transporteur (3, 14), dans une position plus basse que le dispositif transporteur (3, 14), que chaque appareil de prise de vues (12) se compose de deux caméras vidéo (51) qui sont montées avec des directions de vision (13, 13') faisant des angles aigus avec le plan du vitrage isolant (1), que la direction de vision (13, 13') de chacune des caméras vidéo (51) est dirigée sur le bord opposé du scellement du vitrage isolant (1), et que les appareils de prise de vues (12) sont reliés à au moins un moniteur (41) pour la restitution des images des coins (4, 5, 6, 7) du vitrage isolant (1), prises par les appareils de prise de vues (12).

2. Agencement suivant la revendication 1, caractérisé par le fait qu'aux caméras vidéo (51) de l'appareil de prise de vues (12) prévu dans la zone de la buse de scellement (50), sont associés des couvercles qui protègent l'optique de cet appareil et qui sont ouverts exclusivement lors de la prise d'une vue.

3. Agencement suivant la revendication 1 ou 2, caractérisé par le fait qu'à chacun des appareils de prise de vues (12) est associé un dispositif d'éclairage (15) qui éclaire le coin (4, 5, 6, 7) à restituer sous un angle qui est différent de l'angle que la direction de vision (13) des caméras vidéo (51) de l'appareil de prise de vues (12) fait avec le plan du vitrage isolant (1).

4. Agencement suivant la revendication 3, caractérisé par le fait que le dispositif d'éclairage (15) comporte un flash en tant que source de lumière.

5. Agencement suivant l'une des revendications 1 à 4, caractérisé par le fait qu'au moins un appareil de prise de vues (12) supplémentaire est prévu pour prendre des vues des coins supérieurs (6, 7) du vitrage isolant (1) scellé.

6. Agencement suivant la revendication 5, caractérisé par le fait que l'appareil de prise de vues (12) est monté sur une poutre (9) réglable verticalement en va-et-vient, portant des galets (7) montés fous contre lesquels est appuyé le bord supérieur du vitrage isolant (1) scellé, à évacuer.

7. Agencement suivant la revendication 6, caractérisé par le fait que le dispositif d'éclairage (15) associé à l'appareil de prise de vues (12) est monté sur la poutre (9) mobile verticalement en va-et-vient.

8. Agencement suivant l'une des revendications 1 à 7, caractérisé par le fait que les caméras vidéo (51) sont montées de manière que leurs directions de vision soient orientées de façon essentiellement symétrique par rapport au plan du vitrage isolant (1).

9. Agencement suivant l'une des revendications 1 à 8, caractérisé par le fait qu'il est prévu une commande (25, 30) qui déclenche la prise d'une vue par l'appareil de prise de vues (12) disposé dans la zone du début (10) du dispositif transporteur (3, 14) lorsque le vitrage isolant (1) ) est immobile, après achèvement de l'opération de scellement et avant le début de l'évacuation par le dispositif transporteur (3, 14).

10. Agencement suivant l'une des revendications 1 à 9, caractérisé par le fait qu'il est prévu une commande (25, 30) qui déclenche la prise d'une vue par l'appareil de prise de vues (12) prévu à la fin (11) du dispositif transporteur (3, 14) lorsque le vitrage isolant (1) se trouve en position de prélèvement à la fin (11) du dispositif transporteur (3, 14).

11. Agencement suivant l'une des revendications 1 à 10, caractérisé par le fait que les vues produites sont des vues fixes qui sont affichées sur le moniteur (41) ou les moniteurs (41) jusqu'à ce que le vitrage isolant (1) suivant soit amené en vue du scellement.

12. Agencement suivant la revendication 11, caractérisé par le fait que la commande (30) comprend un dispositif (25) pour détecter un vitrage isolant (1) et pour commander l'appareil de prise de vues (12) se trouvant au début (10) du dispositif transporteur (3, 14) lorsque le coin (4) du vitrage isolant (1) que cet appareil doit restituer et qui, par rapport à la direction de transport (49), est le coin arrière, est disposé dans la zone du début (10) du dispositif transporteur (3, 14).

13. Agencement suivant la revendication 12, caractérisé par le fait que la commande comprend un dispositif (25) pour détecter le vitrage isolant (1) et commander l'appareil de prise de vues (12) lorsque le coin (5) du vitrage isolant (1) que cet appareil doit restituer et qui, par rapport à la direction du transport (49), est le coin avant, est disposé dans la zone de la fin (11) du dispositif transporteur (3, 14).

14. Agencement suivant l'une des revendications 1 à 13, caractérisé par le fait qu'il est prévu un dispositif (39) pour détecter l'amenée du vitrage isolant (1) suivant, à sceller, et pour déclencher l'effacement des images des coins (4, 5, 6, 7) du vitrage isolant (1) venant d'être scellé, images visualisées sur le ou les moniteurs (41).

15. Agencement suivant l'une des revendications 1 à 14, caractérisé par le fait que le dispositif d'éclairage (15) est couplé avec la commande (30) des appareils de prise de vues (12) et avec le dispositif (25) pour détecter la présence d'un vitrage isolant (1), le dispositif d'éclairage (15) n'étant en service que pendant la prise d'une vue.

16. Agencement suivant l'une des revendications 12 à 15, caractérisé par le fait que le dispositif pour détecter la présence d'un vitrage isolant (1) est constitué par une barrière photoélectrique ou un détecteur de proximité.
